(19) Europäisches Patentamt
European Patent Office
Office européen des brevets

(11) **EP 2 849 258 A1**

(12) **EUROPEAN PATENT APPLICATION**
published in accordance with Art. 153(4) EPC

(43) Date of publication:
**18.03.2015 Bulletin 2015/12**

(21) Application number: **13788408.6**

(22) Date of filing: **09.05.2013**

(51) Int Cl.:
*H01M 2/16* (2006.01)     *H01G 9/02* (2006.01)
*H01G 11/52* (2013.01)

(86) International application number:
**PCT/JP2013/063009**

(87) International publication number:
**WO 2013/168755 (14.11.2013 Gazette 2013/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.05.2012   JP 2012107429**

(71) Applicants:
• **Hitachi Chemical Company, Ltd.**
**Chiyoda-ku**
**Tokyo 100-6606 (JP)**
• **Kyushu University,**
**National University Corporation**
**Fukuoka-shi, Fukuoka 812-8581 (JP)**

(72) Inventors:
• **ORITA, Akihiro**
**Tsukuba-shi**
**Ibaraki 300-4247 (JP)**
• **KAWAZOE, Hiroshi**
**Tsukuba-shi**
**Ibaraki 300-4247 (JP)**
• **YOSHIDA, Masato**
**Tsukuba-shi**
**Ibaraki 300-4247 (JP)**
• **KITAOKA, Takuya**
**Fukuoka-shi**
**Fukuoka 812-8581 (JP)**

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL ELEMENT AND FABRICATION METHOD FOR SAME**

(57)     The present invention provides a novel separator which has a high heat resistance property and excels in flexibility, and a fabrication method of the separator. The present invention relates to a separator for an electrochemical element consisting of a porous base material containing inorganic fibers and an organic substance, wherein a part or all of the inorganic fibers are covered with the organic substance, and the inorganic fibers are bound through the organic substance.

EP 2 849 258 A1

**Description**

Technical Field

The present invention relates to a separator for an electrochemical element and a fabrication method for the same.

Background Art

Recently, secondary batteries having a high voltage and a high energy density have been required as power supplies for mobile terminals such as laptop computers and cell phones. In order to meet the capacity required of these applications, currently, non-aqueous electrolyte lithium-ion secondary batteries attract attention.

Since non-aqueous electrolyte secondary batteries typified by lithium-ion secondary batteries have a high battery voltage and high energy, a large current flows at the time of internal short circuit or external short circuit of the battery. Therefore, at the time of short circuit, there is the problem of heat generation of the battery due to Joule heat generation, or the problem of swelling or property degradation of the battery due to gas generation associated with melting decomposition of an electrolyte and a separator. In order to solve these problems, batteries using a separator composed of a microporous film made of polypropylene or polyethylene have been proposed (for example, refer to Patent Literature 1). In Patent Literature 1, it is disclosed that, since this separator is melted due to heat generation at the time of short circuit, pores of the separator are closed to increase the resistance thereby to suppress excess heat generation and ignition of the battery.

Currently, as applications of non-aqueous electrolyte secondary batteries are spread, safer batteries are required. In particular, safety improvement when internal short circuit occurs is required. Here, it is thought that, when internal short circuit occurs, a short-circuited part sometimes becomes a temperature of 600°C or more due to local heat generation. Therefore, in a conventional separator made of a polyolefin resin, the short-circuited part of the separator contracts by heat at the time of short circuit, and a contact area (short-circuit area) between a positive electrode and a negative electrode may be increased.

Therefore, batteries using a separator whose heat resistance property is improved by forming a layer containing a filler such as a metal oxide on the surface of a porous base material have been proposed (for example, refer to Patent Literature 2 and 3).

Moreover, a separator in which a layer containing inorganic particles is formed on non-woven fabric made of cellulose has been proposed as a high heat-resistant separator (for example, refer to Patent Literature 4). Furthermore, a separator made of glass fiber has been proposed as a high heat-resistant separator (for example, refer to Patent Literature 5).

Citation List

Patent Literature

Patent Literature 1: Japanese Patent Application Laid-Open No. 60-23954
Patent Literature 2: Japanese Patent Application Laid-Open No. 2005-38793
Patent Literature 3: Japanese Patent Application Laid-Open No. 2006-164761
Patent Literature 4: Japanese Patent Application Laid-Open No. 2011-238427
Patent Literature 5: Japanese Patent Application Laid-Open No. 2005-502177

Summary of Invention

Technical Problem

However, in the separator having a heat-resistant layer containing an inorganic filler or the like, as proposed in Patent Literature 2 to 4, stability is insufficient at a high temperature of 300°C or more, and there is still the problem of insufficient safety of the battery. Furthermore, the glass fiber separator proposed in Patent Literature 5 is fragile, and there is the problem of having trouble with a handling property.

In view of these circumstances, it is an object of the present invention to provide a novel separator which has a high heat resistance property and excels in flexibility, and a fabrication method of the separator.

Solution to Problem

The present inventors made various research so as to solve the above-described problems, and as a result, found that all of a high heat resistance property, flexibility, and high lithium ion conductivity in an electrolyte can be achieved by using a separator containing at least inorganic fibers and an organic substance (for example, glass fiber and cellulose fiber), in which the inorganic fibers are bound through the organic substance.

The present invention relates to <1> a separator for an electrochemical element comprising a porous base material containing inorganic fibers and an organic substance, wherein a part or all of the inorganic fibers are covered with the organic substance, and the inorganic fibers are bound through the organic substance.

The present invention also relates to <2> the separator for an electrochemical element according to <1>, wherein the inorganic fiber is at least one of a glass fiber and a SiC fiber.

The present invention also relates to <3> the separator for an electrochemical element according to <1> or <2>, wherein the organic substance is at least one of organic fibers and polymer particles.

The present invention also relates to <4> the separator for an electrochemical element according to <3>, wherein the organic fiber is at least one selected from the group consisting of a cellulose fiber, an aramid fiber, a polyamide fiber, a polyester fiber, a polyurethane fiber, a polyacrylic fiber, a polyethylene fiber, and a polypropylene fiber.

The present invention also relates to <5> the separator for an electrochemical element according to <3> or <4>, wherein the polymer particle is at least one selected from the group consisting of a polyolefin particles, a cross-linked polymethyl methacrylate particles, a polytetrafluoroethylene particles, benzoguanamine particles, a cross-linked polyurethane particles, cross-linked polystyrene particles, and a melamine particles.

The present invention also relates to <6> the separator for an electrochemical element according to any one of <1> to <5>, wherein a number average fiber diameter of the inorganic fibers is 0.4 to 5 $\mu$m.

The present invention also relates to <7> the separator for an electrochemical element according to any one of <1> to <6>, wherein the porous base material further contains an inorganic filler.

The present invention also relates to <8> the separator for an electrochemical element according to <7>, wherein the inorganic filler is at least one selected from the group consisting of $Al_2O_3$, $SiO_2$, montmorillonite, mica, ZnO, $TiO_2$, $BaTiO_3$, $ZrO_2$, glass, zeolite, and imogolite.

The present invention also relates to <9> the separator for an electrochemical element according to any one of <1> to <8>, wherein the porous base material further contains a surfactant.

The present invention also relates to <10> the separator for an electrochemical element according to any one of <1> to <9>, wherein a thickness of the separator is less than 150 $\mu$m.

The present invention also relates to <11> the separator for an electrochemical element according to any one of <1> to <10>, wherein the electrochemical element is a lithium-ion secondary battery, an electric double layer capacitor, or an aluminum electrolytic condenser.

The present invention also relates to <12> a fabrication method for a separator for an electrochemical element comprising a step of preparing a slurry containing inorganic fibers and an organic substance, a step of forming a sheet by papermaking with the slurry, and a step of performing heat treatment of the sheet at a temperature of a softening temperature of the organic substance or more.

The present invention also relates to <13> a separator for an electrochemical element fabricated by the fabrication method according to <12>.

Advantageous Effects of Invention

According to the present invention, a novel separator which has a high heat resistance property and excels in flexibility, and a fabrication method of the separator can be provided.

The separator for an electrochemical element of the present invention can be thinned and is low in resistance because of excellent ion permeability, and safety in the case of thermal runaway of the electrochemical element can be improved. Therefore, the separator for an electrochemical element of the present invention can be suitably used for various electrochemical elements, in particular, for a lithium-ion battery, an electric double layer capacitor, or an aluminum electrolytic condenser.

Brief Description of the Drawing

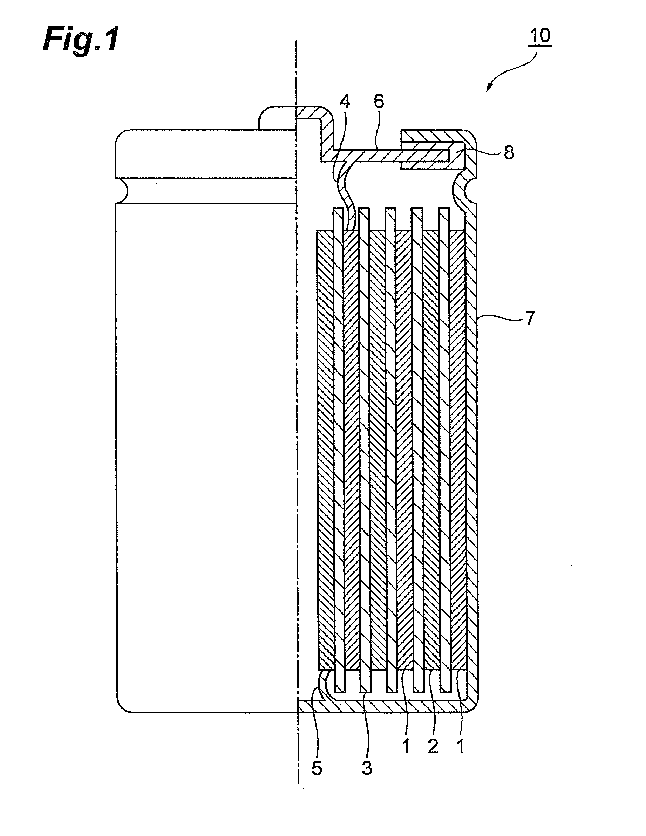

FIG. 1 is a schematic cross-sectional view of a lithium-ion secondary battery.

Description of Embodiments

Hereinafter, an embodiment of the present invention will be described.

<Separator for Electrochemical Element>

A separator for an electrochemical element (hereinafter, simply referred to as "separator") of the present embodiment is a non-woven separator comprising a porous base material containing inorganic fibers and an organic substance, a part or all of the inorganic fibers are covered with the organic substance, and the inorganic fibers are bound through the organic substance. A heat resistance property is imparted by using the inorganic fibers, to improve, in particular, safety of the battery at a high temperature. Moreover, since a part or all of the inorganic fibers are covered with the organic substance and the inorganic fibers are bound to each other, flexibility is imparted to the separator. It is to be noted that the word "bound" means that the inorganic fibers are physically bound to each other through the organic substance through a process where the organic substance temporarily softening by heat treatment or the like hardens again. Therefore, for example, in a case where the fibers are simply mixed, it cannot be said that the inorganic fibers are "bound" to each other even if the organic substance stands among the fibers, and both a high heat resistance property and flexibility cannot be achieved as the present invention.

(Inorganic Fiber)

The inorganic fibers may be woven or non-woven. Moreover, examples of the inorganic fiber include at least one of a glass fiber and a SiC fiber, and it is preferable to use a glass fiber. By using at least one of a glass fiber and a SiC fiber as the inorganic fiber, a heat resistance property of the separator can be further improved.

The glass fiber may be made of alkali glass or alkali-free glass. Moreover, the fiber diameter of the inorganic fiber is not particularly limited, but the number average fiber diameters is preferably 0.4 to 5 $\mu$m, and more preferably 0.5 to 3 $\mu$m. When the fiber diameter is 0.4 $\mu$m or more, the micropore diameter tends to be easy to be uniform, and when it is 5 $\mu$m or less, a sufficiently-thin (for example, 150 $\mu$m or less) electrochemical separator tends to be easy to be fabricated. It is to be noted that the number average fiber diameter of the inorganic fibers can be determined by, for example, a dynamic image analysis method, a laser scanning method (according to JIS (L1081), for example), a direct observation using a scanning electron microscope and the like.

The content of the inorganic fibers contained in the separator is not particularly limited, but it is preferably 3 mass% or more and 99 mass% or less, and more preferably 20 mass% or more and 70 mass% or less, based on the total mass of the separator. When the content is be 3 mass% or more, a more sufficient heat resistance property tends to be obtained, and when it is 99 mass% or less, more sufficient flexibility tends to be obtained.

(Organic Substance)

Examples of the organic substance as a binding agent include at least one selected from organic fibers and polymer particles. Flexibility of the separator can be further improved thereby.

Examples of the organic fibers include plant fibers, animal fibers, regenerated fibers, and synthetic fibers. As the organic fiber, for example, it is preferable to use at least one selected from the group consisting of a cellulose fiber, an aramid fiber, a polyamide fiber, a polyester fiber, a polyurethane fiber, a polyacrylic fiber, a polyethylene fiber, and a polypropylene fiber, and it is preferable to use a cellulose fiber, a aramid fiber, a polyamide fiber, or a polyester fiber. By using these fibers, flexibility of the separator can be further improved. It is to be noted that the above-described organic fibers may be used singly or two or more thereof may be used in combination.

As the polymer particle, it is preferable to use at least one selected from the group consisting of a polyolefin particle, a cross-linked polymethyl methacrylate particle, a polytetrafluoroethylene particle, a benzoguanamine particle, a cross-linked polyurethane particle, a cross-linked polystyrene particle, and a melamine particle. By using these particles, flexibility of the separator can be further improved. It is to be noted that the above-described polymer particles may be used singly or two or more thereof may be used in combination.

The content of the organic substance contained in the separator is not particularly limited, but it is preferably 5 mass% or more and 95 mass% or less, based on the total mass of the separator. When the content is 5 mass% or more, more sufficient flexibility tends to be obtained, and when it is 95 mass% or less, a more sufficient heat resistance property tends to be obtained.

(Inorganic Filler)

The separator of the present embodiment may contain an inorganic filler. The inorganic filler added can functions as a binding auxiliary agent between the inorganic fiber (for example, glass fiber) and the organic substance (for example, pulp fiber, or polymer particles further added). Moreover, the inorganic filler itself can increase a heat resistance property of the separator, and trap impurities (for example, hydrogen fluoride, heavy metal elements) in the electrolyte.

The shape of the inorganic filler is not particularly limited, but examples thereof include an amorphous filler, a plate-like filler, and a spherical filler.

Examples of the inorganic filler used in the present embodiment include particles made of electrical insulating metal oxide, metal nitride, metal carbide, glass or the like. The above-described particles may be used singly, or two or more thereof may be used in combination. In the case where glass particles are used, they can functions as a binding auxiliary agent between the inorganic fiber and the organic substance by performing heat treatment at a temperature of a softening temperature of glass or more.

The content of the inorganic filler in the separator is preferably 0.1 mass% or more and 30 mass% or less, and more preferably 0.5 mass% or more and 20 mass% or less, based on the total mass of the separator. When the content of the inorganic filler is 0.1 mass% or more, effects of the inorganic filler tend to be sufficiently obtained, and when it is 30 mass% or less, handling tends to be easy.

Examples of the metal oxide that can be used as the inorganic filler include at least one selected from the group consisting of $Al_2O_3$, $SiO_2$, montmorillonite, mica, ZnO, $TiO_2$, $BaTiO_3$, $ZrO_2$, glass, zeolite, and imogolite. By using these inorganic fillers, strength, a heat resistance property and the like of the separator can be further improved. Moreover, as the inorganic filler, carbon nanotubes and carbon nanofibers can also be used. In the present embodiment, metal oxides are preferably used, and among them, $Al_2O_3$ particles can be suitably used. By using $Al_2O_3$ particles, hydrogen fluoride generated in the electrolyte at the time of operation of the battery can be further trapped.

The thickness of the separator of the present embodiment is preferably 10 $\mu$m or more and less than 150 $\mu$m, and more preferably 20 to 100 $\mu$m. When the thickness is 10 $\mu$m or more, the separator can have more sufficient mechanical strength, and when it is less than 150 $\mu$m, the internal resistance of the battery can be reduced.

The air permeability (Gurley value) of the separator of the present embodiment is preferably 10 to 3000 sec/100 mL, and more preferably 20 to 2000 sec/100 mL. When the air permeability is 10 sec/100 mL or more, the internal resistance of the battery tends to be reduced, and when it is 3000 sec/100 mL or less, the volume of pores in the separator does not become too large, and thus, more sufficient mechanical strength tends to be retained. It is to be noted that the air permeability of the separator can be measured in conformity with JIS P8142, for example.

The tear strength of the separator of the present embodiment is preferably 0.1 to 500 N. When the tear strength is 0.1 N or more, more sufficient mechanical strength tends to be retained. It is to be noted that the tear strength can be measured using a peel strength tester at 180° peel.

The separator of the present embodiment can be used as a two-layer structure by being deposited on another separator.

<Fabrication Method for Separator for Electrochemical Element>

A fabrication method for the separator of the present embodiment is not particularly limited, but it is preferable to fabricate by a papermaking method based on a wet process. This fabrication method comprises a step of preparing a slurry containing inorganic fibers, an organic substance and the like, a step of forming a sheet by papermaking with the slurry, a step of compressing the sheet in the thickness direction using a pressurizer, and a step of performing heat treatment of the sheet at a temperature of a softening temperature of the organic substance or more.

In the step of preparing a slurry, a dispersing medium of the inorganic fibers and the organic substance may be water or an organic solvent. By this method, a low-cost and thin separator can be easily fabricated. It is to be noted that the contents of the respective components in the slurry may be arbitrarily adjusted such that the contents of the respective components in the separator to be obtained are within the above-described ranges.

The slurry may contain a surfactant. If the surfactant is contained, the inorganic fiber and the organic substance become easy to be dispersed when fabricating the separator. The surfactant may be decomposed during subsequent heat treatment, or may remain to be contained in the porous base material after the heat treatment. The surfactant may be a silane coupling agent, a cationic surfactant, an anionic surfactant, or a nonionic surfactant.

As the cationic surfactant, it is preferable to use alkylammonium salts, and examples thereof include dioctyldimethyl ammonium chloride, didecyldimethyl ammonium chloride, dicoco dimethyl ammonium chloride, coco benzyl methyl ammonium chloride, coco (rectification) benzyl dimethyl ammonium chloride, octadecyl trimethyl ammonium chloride, dioctadecyl dimethyl ammonium chloride, dihexadecyl dimethyl ammonium chloride, di(hydrogenated tallow) dimethyl ammonium chloride, di(hydrogenated tallow) benzyl methyl ammonium chloride, (hydrogenated tallow) benzyl dimethyl ammonium chloride, dioleyl dimethyl ammonium chloride, di(ethylene hexadecane carboxylate) dimethyl ammonium chloride, diallyl dimethyl ammonium chloride, N-octadecyl-N-dimethyl-N-trimethyl-propylene-diammonium dichloride, poly(dioctyldimethyl ammonium chloride), poly(didecyldimethyl ammonium chloride), poly(dicoco dimethyl ammonium chloride), poly(coco benzyl methyl ammonium chloride), poly(coco benzyl dimethyl ammonium chloride), poly(octadecyl trimethyl ammonium chloride), poly(dioctadecyl dimethyl ammonium chloride), poly(dihexadecyl dimethyl ammonium chloride), poly(dioleyl dimethyl ammonium chloride), poly(di(ethylene hexadecane carboxylate) dimethyl ammonium chloride), and poly(diallyl dimethyl ammonium chloride).

Examples of the anionic surfactant include carboxylates, N-acylsarcosinates, alkane sulfonates, straight-chain and branched-chain alkyl aryl sulfonates, dialkyl sulfosuccinates, aryl sulfonates, naphthalenesulfonates, N-acyl-N-alkyl laurates, 2-sulfoethylesters of fatty acids, olefin sulfonates, alkyl sulfates, sulfated natural oils, sulfated alkylphenol alkoxylates, alkanols, phosphate esters of phenol and alkylphenol alkoxylates, alkyl(aryl) sulfonates, sulfate esters, phosphate esters, alkyl(aryl) phosphates, alkyl(aryl) phosphonates, polyoxyethylene alkylether phosphates, carboxylated alkyl ethoxylates, carboxylated dodecyl benzene sulfonates, and ammonium polyoxyethylene alkylether sulfates.

Examples of the nonionic surfactant include polyoxyalkylene dialkyl esters, polyoxyalkylene alkyl esters, polyoxyalkylene alkyl ethers, and sorbitan alkyl esters.

The slurry may contain a flocculant. If the flocculant is contained, the yield of the separator to be fabricated can be improved. The flocculant may be a cationic polymer flocculant or an anionic polymer flocculant, and both may be used together.

Next, a sheet is formed by papermaking with the slurry obtained in this manner using a general paper machine, and then the sheet is further compressed in the thickness direction using a pressurizer. It is to be noted that a roll press machine, a platen pressing machine and the like can be used as the pressurizer, and pressurizing conditions at the time can be arbitrarily set depending on a material to be used, an intended thickness and the like. For example, in the case of using a platen pressing machine, it is preferable to compress the sheet at 400 to 500 kPa for 5 minutes or more so as to obtain an intended compressed body.

The compressed sheet is further subjected to heat treatment. In the step of performing heat treatment, the heat treatment is performed at a temperature of a softening temperature of the organic substance or more. By performing the heat treatment at a temperature of a softening temperature of the organic substance or more, the inorganic fibers can be firmly bound to each other when the organic substance temporarily softens and hardens again, and a part or all of the surface of the inorganic fibers can be covered with the organic substance, and therefore, flexibility can be imparted to the separator. Furthermore, during the heat treatment, a part of the organic substance is decomposed to function as a template, and can improve retention power of the electrolyte.

It is to be noted that a specific treatment temperature is not necessarily limited because it depends on the softening temperature of the organic substance, but in particular, it is preferable to perform the treatment at 100 to 800°C, more preferable to perform the treatment at 150 to 500°C, further preferable to perform the treatment at 150 to 400°C, and particularly preferable to perform the treatment at 150 to 300°C. When the treatment temperature is 100°C or more, the organic substance sufficiently softens and the inorganic fibers tend to be easy to be bound to each other, and when it is 800°C or less, a part of the organic substance is easy to remain and flexibility tends to be easy to be imparted to the separator. It is to be noted that, when the heat treatment is performed in the foregoing temperature range, treatment time is preferably 1 to 300 seconds, and more preferably 5 to 60 seconds.

By performing the above steps, the separator of the present embodiment can be obtained.

<Electrochemical Element>

An electrochemical element can be fabricated by using the separator of the present embodiment. Examples of the electrochemical element include a lithium-ion secondary battery, an electric double layer capacitor, and an aluminum electrolytic condenser. The separator of the present embodiment has a high heat resistance property and excels in flexibility, and thus, can be applied extremely well to these electrochemical elements.

It is to be noted that FIG. 1 shows a schematic cross-sectional view of a lithium-ion secondary battery. A lithium-ion secondary battery 10 includes a positive electrode 1 connected to a positive electrode cover 6 with a positive electrode tab 4, and a negative electrode 2 connected to a battery can (negative electrode can) 7 with a negative electrode tab 5. These positive electrode 1 and negative electrode 2 are arranged to be opposed to each other through a separator 3, and these are soaked in a non-aqueous electrolyte sealed with a gasket 8.

In the case of a lithium secondary battery and a lithium-ion secondary battery, as a positive-electrode active material contained in the positive electrode, composite oxides of lithium and transition metals, such as $LiCoO_2$, $LiNiO_2$, $LiMnO_2$, and $LiMn_2O_4$, transition metal oxides such as $MnO_2$ and $V_2O_5$, transition metal sulfides such as $MoS_2$ and $TiS$, conductive polymer compounds such as polyacetylene, polyacene, polyaniline, polypyrrole, and polythiophene, and disulfide compounds such as poly(2,5-dimercapto-1,3,4-thiadiazole) are used.

As a current collector of the positive electrode, for example, metal foil of aluminum or the like, a punching metal, a mesh, and an expand metal can be used, and generally, aluminum foil having a thickness of 10 to 30 $\mu$m is suitably used.

As a negative-electrode active material contained in the negative electrode, for example, metal lithium, a lithium alloy such as a lithium-aluminum alloy, a carbonaceous material capable of adsorbing and releasing lithium, graphite, coke such as phenol resin or furan resin, carbon fiber, glassy carbon, pyrolytic carbon, activated carbon, and a lithium-titanium compound are used.

In the case where a current collector is used for the negative electrode, as the current collector, foil made of copper or nickel, a punching metal, a mesh, an expand metal and the like can be used, and generally, copper foil is used. In the case where the thickness of the entire negative electrode is thinned so as to obtain a battery having a high energy density, the upper limit of the thickness of the negative electrode current collector is preferably 30 $\mu$m, and the lower limit thereof is preferably 5 $\mu$m.

As a conductive auxiliary agent used when forming an electrode using an electrode active material, for example, carbon black such as acetylene black and Ketjenblack, natural graphite, thermally expanded graphite, carbon fiber, ruthenium oxide, titanium oxide, and metal fiber of aluminum, nickel or the like are used. Among them, acetylene black or Ketjenblack, which can ensure an intended conductive property with a small amount blended, is preferable. It is to be noted that, with respect to the total mass of the electrode active material, about 0.5 to 20 mass% of the conductive auxiliary agent is generally blended, and 1 to 10 mass% thereof is preferably blended.

As a binder resin used together with the conductive auxiliary agent, known various binders can be used. Examples thereof include polytetrafluoroethylene, polyvinylidene fluoride, carboxymethylcellulose, a fluoroolefin copolymer cross-linked polymer, a styrene-butadiene copolymer, polyacrylonitrile, polyvinyl alcohol, polyacrylic acid, polyimide, petroleum pitch, coal pitch, and phenol resin.

As the non-aqueous electrolyte, a solution obtained by dissolving a lithium salt in an organic solvent is used. The lithium salt is not particularly limited as long as it dissociates in the solvent to form Li$^+$ ions and does not cause a side reaction such as decomposition within a voltage range used for a battery. For example, inorganic lithium salts such as $LiClO_4$, $LiPF_6$, $LiBF_4$, $LiAsF_6$, and $LiSbF_6$; and organic lithium salts such as $LiCF_3SO_3$, $LiCF_3CO_2$, $Li_2C_2F_4(SO_3)_2$, $LiN(CF_3SO_2)_2$, $LiC(CF_3SO_2)_3$, $LiC_nF_{2n+1}SO_3$ (n≥2), and $LiN(RfOSO_2)_2$ [wherein Rf represents a fluoroalkyl group] can be used.

The organic solvent used for the electrolyte is not particularly limited as long as it dissolves the above-described lithium salts and does not cause a side reaction such as decomposition within a voltage range used for a battery. Examples thereof include cyclic carbonates such as ethylene carbonate, propylene carbonate, butylene carbonate, and vinylene carbonate; chain carbonates such as dimethyl carbonate, diethyl carbonate, and methyl ethyl carbonate; chain esters such as methyl propionate; cyclic esters such as $\gamma$-butyrolactone; chain ethers such as dimethoxyethane, diethyl ether, 1,3-dioxolane, diglyme, triglyme, and tetraglyme; cyclic ethers such as dioxane, tetrahydrofuran, and 2-methyl tetrahydrofuran; nitriles such as acetonitrile, propionitrile, and methoxy propionitrile; sulfite esters such as ethylene glycol sulfite; and ionic liquids, and these may be used alone or two or more kinds thereof may be used in combination. It is to be noted that, in order to form a battery having better properties, a solvent is preferably used with a combination capable of obtaining high electric conductivity, as a mixed solvent of ethylene carbonate and a chain carbonate.

Furthermore, for the purpose of improving properties such as safety, a charge/discharge cycle property, and high-temperature preservability, additives such as vinylene carbonates, 1,3-propane sultone, diphenyl disulfide, cyclohexane, biphenyl, fluorobenzene, and tert-butylbenzene may be arbitrarily added to the these electrolytes.

The concentration of the lithium salt in the electrolyte is preferably 0.5 to 2 mol/L, and more preferably 0.9 to 1.5 mol/L.

Examples of the configuration of the lithium-ion secondary battery of the present embodiment include a tube shape (for example, square tube shape or cylindrical tube shape) using a steel can, an aluminum can or the like as an outer package body (outer package can). Moreover, the configuration may be a soft package battery using a metal-deposited laminated film as an outer package body.

It is to be noted that the non-aqueous electrolyte of the present embodiment can be applied to a hybrid electric storage device in which one of a positive electrode and a negative electrode is used as a polarized electrode used in an electric double layer capacitor, and the other is used as an electrode using a material capable of inserting and desorbing lithium ions as an active material, which is used in a lithium-ion battery.

The lithium-ion secondary battery of the present embodiment can be applied to the same applications as various applications for which conventionally-known lithium-ion secondary batteries are used.

Examples

Hereinafter, the present invention will be described in details based on Examples. However, Examples described below are not limited to the present invention.

(Example 1)

<Formation of Separator>

0.5 g of glass fibers (CMLF208, manufactured by Nippon Sheet Glass Co., Ltd., average fiber diameter 0.8 $\mu$m) and 600 ml of ion-exchange water were put in a mixer and stirred for 2 minutes. Next, 2.24 g of pulp fibers obtained by beating pieces of craft paper was put in the mixer and stirred for 3 minutes to prepare a slurry. The slurry was poured into a papermaking machine, Standard Sheet Machine (No2545, manufactured by KUMAGAI RIKI KOGYO Co., Ltd.), to fill it with a predetermined amount of ion-exchange water, sufficiently stirred, and then, drained to obtain a sheet.

Next, a filter paper and a dummy paper were deposited on the sheet and left at rest to couch; and then the sheet and the filter paper were peeled off together from the dummy paper and put on a SUS plate such that the sheet was in contact with the SUS plate, and pressurized for 3 minutes at a predetermined pressure. After that, the filter paper was peeled off, and the sheet was dried at 105°C for 2 hours, subsequently subjected to heat treatment at 300°C for 10 minutes, and finally vacuum dried at 150°C for 1 hour to obtain a separator. The thickness of the separator was 58 $\mu$m. Moreover, the softening temperature of the pulp fiber was 250°C.

<Heat Resistance Property of Separator>

(Weight Retention Rate)

The weight retention rate after heating the separator at 500°C for 1 hour was measured using a thermogravimetric simultaneous measuring instrument (manufactured by Seiko Instruments Inc.). The weight retention rate of the separator after heating was 65%, and it was found that the separator has a high heat resistance property.

(Area Retention Rate)

The separator was cut to obtain 2x2 cm square test piece. Next, the test piece was sandwiched between two glass plates of vertical 7.5 cm×horizontal 7.5 cm×thickness 5 mm, and they were horizontally placed to be left at rest in a stainless-steel tray. Then, they were left in an oven at 300°C for 1 hour and the area was measured. The area retention rate was evaluated as follows and used as an index of heat resistance stability. The result is shown in Table 1. It is to be noted that a larger area retention rate more excels in heat resistance stability.

$$\text{Area Retention Rate} = (\text{Area after Test/Area before Test: 4 cm}^2) \times 100\ (\%)$$

<Flexibility of Separator>

The flexibility of the separator was evaluated by a winding property test. When the separator was wound around a stainless-steel cylinder having a diameter of 2 cm, the case where a fracture, a split, and a crack cannot be visually observed was evaluated as A, and the case where a fracture, a split, or a crack can be visually observed was evaluated as B.

<Formation of Positive Electrode for Lithium-Ion Secondary Battery>

A paste was made by mixing lithium-cobalt oxide ("Cellseed10N" manufactured by Nippon Chemical Industrial Co., LTD.) as a positive-electrode active material, conductive carbon ("DENKA BLACK" manufactured by DENKI KAGAKU KOGYO KABUSHIKI KAISHA) as a conductive auxiliary agent, polyvinylidene fluoride ("PVDF#1120" manufactured by KUREHA CORPORATION) as a binder resin, and N-methyl pyrrolidone (hereinafter, NMP) as a coating solvent at a ratio of active material:conductive carbon:binder resin:NMP=94:3:3:28 (weight ratio), applied on aluminum current collecting foil ("20CB" manufactured by JAPAN CAPACITOR INDUSTRIAL CO., LTD.), and dried at 80°C for 3 hours. After that, this was rolled and punched out into a circle having a diameter of 14 mm to obtain a positive electrode for a lithium-ion secondary battery. The amount applied was 9.5 mg/cm$^2$, and the thickness of the active material layer after pressing was 31 $\mu$m.

<Formation of Lithium-Ion Secondary Battery>

Circular metal lithium having a thickness of 1 mm and a diameter of 15 mm was used as a counter electrode and the positive electrode obtained as above was used as a working electrode, and the counter electrode and the working electrode were arranged to be opposed to each other with one circular separator having a diameter of 19 mm, which was obtained by cutting the separator of Example 1, and one polyethylene porous film ("Hipore N8416" manufactured by Asahi Kasei Corporation, film thickness 25 $\mu$m) sandwiched therebetween. The polyethylene porous film was arranged at the positive electrode side. Furthermore, a lithium-ion secondary battery was formed by a general method using a non-aqueous electrolyte obtained by adding 2 weight% of vinylene carbonate to a mixed solution of ethylene carbonate, diethyl carbonate, and dimethyl carbonate (1:1:1 capacity ratio), in which LiPF$_6$ was dissolved so as to be 1.0 mol/L.

<Evaluation of Battery Property>

Charge was performed to 4.2 V at a current corresponding to 0.1 C with respect to the counter electrode (lithium electrode). Discharge was performed to 3.0 V at a current corresponding to 0.1 C with respect to the lithium electrode, and initial (first) discharge capacity was measured. Next, charge was performed to 4.2 V at a current corresponding to 0.1 C, and then, discharge was performed to 3.0 V at a current corresponding to 2.0 C. A value obtained by dividing discharge capacity at 2.0 C by discharge capacity at 0.1 C was calculated as a discharge capacity retention rate (%). The result is shown in Table 1.

<Heating Test>

The formed lithium secondary battery was placed in a heating tank, and, after increasing the temperature of the heating tank to 100°C at a rate of temperature increase of 5°C/min, was left for 10 minutes in that state. After that, the temperature of the battery was monitored, and the maximum temperature which the battery temperature reached was measured. The result is shown in Table 1.

(Example 2)

0.5 g of glass fiber (CMLF208, manufactured by Nippon Sheet Glass Co., Ltd., average fiber diameter 0.8 $\mu$m) and 600 ml of ion-exchange water were put in a mixer and stirred for 2 minutes. Next, 5 ml of a cationic polymer flocculant polydiallyldimethylammonium chloride (manufactured by Aldrich), 2.5 g of alumina sol (Aluminasol 250, manufactured by Nissan Chemical Industries, Ltd.), 10 mL of an anionic polymer flocculant Hiholder 351 (manufactured by Kurita Water Industries Ltd.), and 2.24 g of pulp fiber obtained by beating craft paper were put in the mixer and stirred for 3 minutes to prepare a slurry. The slurry was poured into Standard Sheet Machine Paper Machine to fill it with a predetermined amount of ion-exchange water, sufficiently stirred, and then, drained to obtain a sheet. Next, after filter paper and dummy paper were deposited on the sheet to be left at rest and couched, the sheet and the filter paper were peeled off together from the dummy paper and put on a SUS plate such that the sheet was in contact with the SUS plate, and it was pressurized for 3 minutes at a predetermined pressure. After that, the filter paper was peeled off, and the sheet was dried at 105°C for 2 hours, subjected to heat treatment at 300°C for 10 minutes, and finally vacuum dried at 150°C for 1 hour to obtain a separator. The film thickness of the separator was 90 $\mu$m. A lithium-ion secondary battery was formed in the same manner as Example 1 except that this separator was used, and various evaluations were performed. The result is shown in Table 1.

(Example 3)

0.25 g of glass fiber (CMLF208, manufactured by Nippon Sheet Glass Co., Ltd., average fiber diameter 0.8 $\mu$m) and 600 ml of ion-exchange water were put in a mixer and stirred for 2 minutes. Next, 2.24 g of pulp fiber obtained by beating craft paper was put in the mixer and stirred for 3 minutes to prepare a slurry. The slurry was poured into Standard Sheet Machine Paper Machine (No2545, manufactured by KUMAGAI RIKI KOGYO Co., Ltd.) to fill it with a predetermined amount of ion-exchange water, sufficiently stirred, and then, drained to obtain a sheet. Next, after filter paper and dummy paper were deposited on the sheet to be left at rest and couched, the sheet and the filter paper were peeled off together from the dummy paper and put on a SUS plate such that the sheet was in contact with the SUS plate, and it was pressurized for 3 minutes at a predetermined pressure. After that, the filter paper was peeled off, and the sheet was dried at 105°C for 2 hours, subsequently subjected to heat treatment at 300°C for 10 minutes, and finally vacuum dried at 150°C for 1 hour to obtain a separator. The film thickness of the separator was 58 $\mu$m. Moreover, the softening temperature of the pulp fiber was 250°C. A lithium-ion secondary battery was formed in the same manner as Example 1 except that this separator was used, and various evaluations were performed. The result is shown in Table 1.

(Comparative Example 1)

A lithium-ion secondary battery was formed in the same manner as Example 1 except that a polyethylene porous film ("Hipore N8416" manufactured by Asahi Kasei Corporation, film thickness 25 $\mu$m) was used as the separator, and various evaluations were performed. The result is shown in Table 1.

(Comparative Example 2)

A lithium-ion secondary battery was formed in the same manner as Example 1 except that a cellulose separator ("TF40" manufactured by NIPPON KODOSHI CORPORATION, film thickness 40 $\mu$m) was used as the separator, and various evaluations were performed. The result is shown in Table 1.

(Comparative Example 3)

A separator and a lithium-ion secondary battery were formed in the same manner as Example 1 except that pulp fiber was not used, and various evaluations were performed. The result is shown in Table 1. It is to be noted that a fracture (chip) was generated in the separator by the flexibility test, and thus, the heating test was not performed.

[Table 1]

|  | Flexibility of Separator | Weight Retention Rate (%) (500°C) | Area Retention Rate (%) (300°C) | Discharge Capacity Retention Rate (%) (2 C/0.1 C) | Maximum Temperature (°C) (Heating Test) |
|---|---|---|---|---|---|
| Example 1 | A | 65 | 100 | 90 | 90 |
| Example 2 | A | 68 | 100 | 90 | 92 |
| Example 3 | A | 60 | 100 | 88 | 90 |
| Comparative Example 1 | A | 1 | 10 | 90 | 160 |
| Comparative Example 2 | A | 5 | 70 | 84 | 200 |
| Comparative Example 3 | B | 98 | 100 | 0 | Not Performed |

As is clear from Table 1, it is found that the separators of Examples 1 to 3 have flexibility, and excel in not only a heat resistance property but also a rate property, temperature increase in the heating test can be suppressed, and both safety and high performance can be achieved. On the other hand, the separators of Comparative Example 1 and Comparative Example 2 had an insufficient heat resistance property and showed a high value exceeding 100°C in the heating test, and therefore, it is found that safety of the battery is insufficient. Moreover, since flexibility of the separator of Comparative Example 3 was insufficient, short circuit was generated inside the battery, and the discharge capacity cannot be measured.

Reference Signs List

1. positive electrode
2. negative electrode
3. separator
4. positive electrode tab
5. negative electrode tab
6. positive electrode cover
7. battery can (negative electrode can)
8. gasket
10. lithium-ion secondary battery

Claims

1. A separator for an electrochemical element consisting of a porous base material containing inorganic fibers and an organic substance, wherein
   a part or all of the inorganic fibers are covered with the organic substance, and the inorganic fibers are bound through the organic substance.

2. The separator for an electrochemical element according to claim 1, wherein the inorganic fiber is at least one of a glass fiber and a SiC fiber.

3. The separator for an electrochemical element according to claim 1 or 2, wherein the organic substance is at least one of organic fibers and polymer particles.

4. The separator for an electrochemical element according to claim 3, wherein the organic fiber is at least one selected from the group consisting of a cellulose fiber, an aramid fiber, a polyamide fiber, a polyester fiber, a polyurethane fiber, a polyacrylic fiber, a polyethylene fiber, and a polypropylene fiber.

5. The separator for an electrochemical element according to claim 3 or 4, wherein the polymer particle is at least one selected from the group consisting of a polyolefin particle, a cross-linked polymethyl methacrylate particle, a polytetrafluoroethylene particle, a benzoguanamine particle, a cross-linked polyurethane particle, a cross-linked polystyrene particle, and a melamine particle.

6. The separator for an electrochemical element according to any one of claims 1 to 5, wherein a number average fiber diameter of the inorganic fibers is 0.4 to 5 $\mu$m.

7. The separator for an electrochemical element according to any one of claims 1 to 6, wherein the porous base material further contains an inorganic filler.

8. The separator for an electrochemical element according to claim 7, wherein the inorganic filler is at least one selected from the group consisting of $Al_2O_3$, $SiO_2$, montmorillonite, mica, ZnO, $TiO_2$, $BaTiO_3$, $ZrO_2$, glass, zeolite, and imo-golite.

9. The separator for an electrochemical element according to any one of claims 1 to 8, wherein the porous base material further contains a surfactant.

10. The separator for an electrochemical element according to any one of claims 1 to 9, wherein a thickness of the separator is less than 150 $\mu$m.

11. The separator for an electrochemical element according to any one of claims 1 to 10, wherein the electrochemical element is a lithium-ion secondary battery, an electric double layer capacitor, or an aluminum electrolytic condenser.

12. A fabrication method for a separator for an electrochemical element comprising:

    a step of preparing a slurry containing inorganic fibers and an organic substance;
    a step of forming a sheet by papermaking with the slurry; and
    a step of performing heat treatment of the sheet at a temperature of a softening temperature of the organic substance or more.

13. A separator for an electrochemical element fabricated by the fabrication method according to claim 12.

Fig.1

# EP 2 849 258 A1

| | INTERNATIONAL SEARCH REPORT | International application No. |
|---|---|---|
| | | PCT/JP2013/063009 |

A. CLASSIFICATION OF SUBJECT MATTER
*H01M2/16*(2006.01)i, *H01G9/02*(2006.01)i, *H01G11/52*(2013.01)i

According to International Patent Classification (IPC) or to both national classification and IPC

B. FIELDS SEARCHED

Minimum documentation searched (classification system followed by classification symbols)
H01M2/16, H01G9/02, H01G11/52

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 6-275251 A (Mitsui Petrochemical Industries, Ltd.),<br>30 September 1994 (30.09.1994),<br>claim 1; paragraphs [0009] to [0013]<br>& US 5436094 A     & EP 616379 A1<br>& DE 69414897 C     & DE 69414897 D<br>& CA 2119398 A     & CA 2119398 A1 | 1-10,12,13<br>11 |
| Y | JP 2007-317405 A (Nippon Sheet Glass Co., Ltd.),<br>06 December 2007 (06.12.2007),<br>claims 1, 8; paragraph [0014]; examples<br>(Family: none) | 11 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 July, 2013 (04.07.13) | 16 July, 2013 (16.07.13) |

| Name and mailing address of the ISA/<br>Japanese Patent Office | Authorized officer |
|---|---|
| Facsimile No. | Telephone No. |

Form PCT/ISA/210 (second sheet) (July 2009)

13

**INTERNATIONAL SEARCH REPORT**

International application No.

PCT/JP2013/063009

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2006/057240 A1  (Nippon Sheet Glass Co., Ltd.),<br>01 June 2006 (01.06.2006),<br>claims 1, 8; paragraphs [0021], [0031]<br>& US 2007/0292673 A1    & EP 1816258 A1<br>& WO 2006/057240 A1    & CN 101098998 A | 11 |
| A | JP 4-292855 A  (Nippon Muki Co., Ltd.),<br>16 October 1992 (16.10.1992),<br>claim 1; paragraphs [0004], [0006]<br>(Family: none) | 1-13 |
| A | JP 8-130001 A  (Japan Storage Battery Co., Ltd.),<br>21 May 1996 (21.05.1996),<br>entire text<br>(Family: none) | 1-13 |
| A | JP 7-183021 A  (Shin-Kobe Electric Machinery Co., Ltd.),<br>21 July 1995 (21.07.1995),<br>entire text<br>(Family: none) | 1-13 |
| A | JP 2002-216733 A  (Nippon Muki Co., Ltd.),<br>02 August 2002 (02.08.2002),<br>entire text<br>(Family: none) | 1-13 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60023954 A
- JP 2005038793 A
- JP 2006164761 A
- JP 2011238427 A
- JP 2005502177 A